# DEMANDE DE BREVET EUROPEEN

(11) **EP 4 571 429 A1**
(43) Date de publication de la demande: **18.06.2025**
(21) Numéro de dépôt: 23217082.9
(22) Date de dépôt: 15.12.2023
(51) Int. Cl.: G04D 3/00, G04B 37/10, G04B 39/02

(54) **RÉALISATION DE GARNITURE D'ÉTANCHÉITÉ D'HORLOGERIE**

(71) Demandeur: The Swatch Group Research and Development Ltd, 2074 Marin (CH)
(72) Inventeur: DOVCIK, Marek, 06250 Mougins (FR); FRANÇOIS, Nicolas, 2000 Neuchâtel (CH); NAPOLI, Sophie, 2000 Neuchâtel (CH)
(74) Mandataire: ICB SA

(57) **Abrégé**

Un aspect de l'invention concerne un procédé de réalisation d'un composant horloger (10) dont une première partie (11) comporte une première surface de référence (110) tolérancée, en première étape on choisit un premier matériau pour réaliser cette première partie (11) par fabrication additive, on prépare une embase (50), en deuxième étape on grave dans ladite embase (50) une surface d'embase (150), qui est le négatif de la première surface de référence (110), on la positionne sur un moyen de fabrication additive, en troisième étape on fait croître par fabrication additive la première partie (11) dudit composant (10) en contact avec la totalité de la surface d'embase (150), en quatrième étape on contrôle le développement de ladite première partie (11) en référence à une valeur de consigne prédéterminée, et on reprend de façon itérative ladite troisième étape de fabrication additive jusqu'à l'obtention du développement désiré.

## Description

### Domaine technique de l'invention

L'invention concerne un procédé de réalisation par fabrication additive d'un composant d'horlogerie comportant au moins une première partie comportant une première surface de référence avec une première géométrie tolérancée en dimension et/ou en planéité et/ou en cylindricité et/ou en état de surface.

L'invention concerne le domaine de l'étanchéité des composants et sous-ensembles d'horlogerie, et plus particulièrement le domaine de la fabrication des garnitures d'étanchéité d'horlogerie.

### Arrière-plan technologique

Les garnitures d'étanchéité, et en particulier les joints thermoplastiques pour l'horlogerie, sont aujourd'hui réalisées via moulage par injection ou extrusion suivie d'usinage ou un autre procédé nécessitant une étape d'usinage. Ces joints doivent remplir des critères très stricts en terme de tolérances. Nous pouvons retrouver ces joints sur des glaces, des fonds chassés, des couronnes ou d'autres éléments de pièce d'horlogerie, notamment de montre, nécessitant une étanchéité ou une adhésion performante.

De nouvelles approches comme la fabrication additive ou impression 3D permettent de réaliser des designs originaux et de nouveaux types d'assemblage comprenant également les joints d'étanchéité. Cependant, il est très difficile de remplir les critères de précision pour ces joints et cela notamment concernant les tolérances. La dimension la plus critique est l'épaisseur du joint.

### Résumé de l'invention

L'invention se propose de mettre au point un procédé permettant de garantir les tolérances sévères, aussi bien dimensionnelles que d'état de surface, des garnitures d'étanchéité d'horlogerie, tout en autorisant des fabrications en petite série sans devoir investir dans des outillages coûteux.

A cet effet, l'invention concerne un procédé de réalisation par fabrication additive d'un composant d'horlogerie comportant au moins une première partie comportant une première surface de référence avec une première géométrie tolérancée en dimension et/ou en planéité et/ou en cylindricité et/ou en état de surface.

Selon l'invention, dans une première étape on se munit d'au moins un premier matériau apte à la réalisation par fabrication additive au moins de ladite première partie dudit composant, et on se munit d'une embase apte à supporter la croissance dudit premier matériau et qu'on réalise dans un matériau d'embase qu'on choisit pour permettre une séparation ultérieure sans arrachement de ladite première partie et de ladite embase, dans une deuxième étape on usine ladite embase dans laquelle on réalise une gravure d'une première surface d'embase, qui est le négatif de ladite première surface de référence, avec une géométrie d'embase selon des tolérances, qui sont égales ou plus étroites que celles de ladite première géométrie de ladite première surface de référence, respectivement en dimension et/ou en planéité et/ou en cylindricité et/ou en état de surface, et on la positionne sur un moyen de fabrication additive, dans une troisième étape on fait croître par fabrication additive au moins ladite première partie dudit composant en contact avec la totalité de ladite première surface d'embase, dans une quatrième étape on contrôle le développement de ladite première partie en référence à une première valeur de consigne prédéterminée, et on reprend de façon itérative ladite troisième étape de fabrication additive avec apport dudit premier matériau et ladite quatrième étape jusqu'à l'obtention et la vérification d'un développement de ladite première partie supérieur ou égal à ladite première valeur de consigne prédéterminée, et on stoppe la fabrication additive avec apport dudit premier matériau quand ledit développement de ladite première partie est supérieur ou égal à ladite première valeur de consigne prédéterminée.

### Brève description des figures

Les buts, avantages et caractéristiques de l'invention apparaîtront mieux à la lecture de la description détaillée qui va suivre, en référence aux dessins annexés, où :

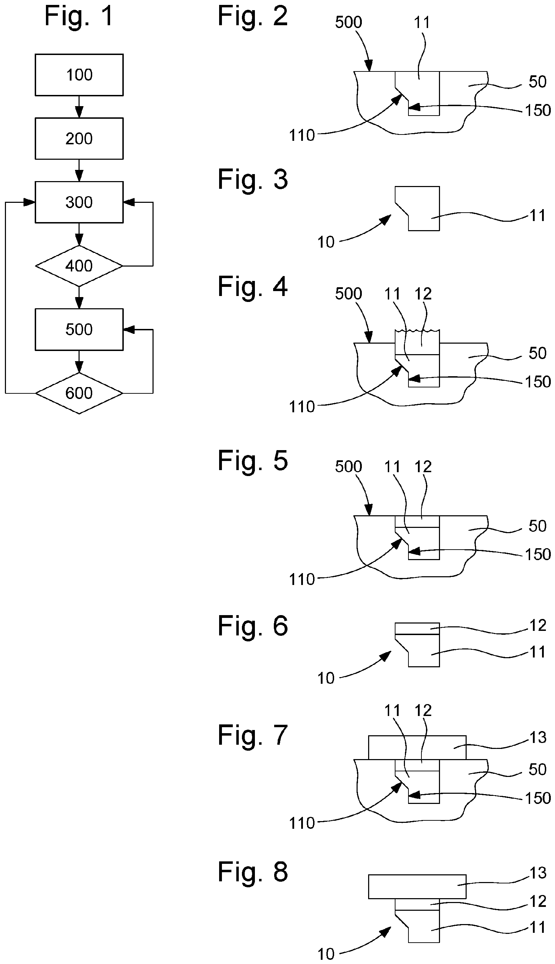

- la figure 1 est un logigramme illustrant les différentes étapes de réalisation d'un composant d'horlogerie selon l'invention, dans les différentes variantes de ce procédé ;
- la figure 2 illustre, de façon schématisée et en vue en coupe, une embase dans laquelle on grave, selon le procédé de l'invention, une première surface d'embase avec des tolérances plus étroites que celles du composant à obtenir, et son remplissage par un premier relief d'un premier matériau déposé par fabrication additive, notamment par impression tridimensionnelle, dans la gravure de cette première surface d'embase;
- la figure 3 illustre, de façon similaire à la figure 2, le composant réalisé selon la figure 2, après son extraction de l'embase;
- la figure 4 illustre, de façon similaire à la figure 2, une variante dans laquelle on fait croître successivement, dans la gravure de la première surface d'embase, un premier relief d'un premier matériau et un deuxième relief d'un deuxième matériau, et où ce deuxième relief surmonte une surface supérieure de l'embase;
- la figure 5 illustre, de façon similaire à la figure 4, l'arasage du deuxième relief au niveau de surface supérieure de l'embase;
- la figure 6 illustre, de façon similaire à la figure 3, le composant réalisé selon la figure 5, après son extraction de l'embase;
- la figure 7 illustre, de façon similaire à la figure 4, une variante dans laquelle on fait croître successivement, dans la gravure de la première surface d'embase, un premier relief d'un premier matériau et un deuxième relief d'un deuxième matériau, et où on fait encore croître un troisième relief d'un autre deuxième matériau, ce troisième relief formant une partie structurelle rigide du composant;
- la figure 8 illustre, de façon similaire à la figure 6, le composant réalisé selon la figure 7, après son extraction de l'embase.

### Description détaillée de l'invention

Afin de s'affranchir de la mauvaise qualité de garnitures d'étanchéité, notamment de joints thermoplastiques, l'invention propose des améliorations au procédé de fabrication additive, qui devient plus adapté pour remplir les critères de qualité des joints horlogers thermoplastiques. En particulier par rapport à un procédé de fabrication par impression tridimensionnelle sur un support, qui ne permet pas toujours de respecter la totalité des tolérances dimensionnelles et d'état de surface.

Dans un premier temps, selon l'invention, on réalise, pour chaque géométrie de garniture, un tapis de plateau d'impression sur mesure. Un tel tapis contiendra une gravure de la partie inférieure du joint à réaliser. La gravure est réalisée via laser ou un autre procédé équivalent.

Par la suite, grâce à un procédé de fabrication additive, notamment mais non limitativement l'impression tridimensionnelle, on vient remplir cette gravure afin d'obtenir une forme précise ayant une qualité comparable à celle des joints injectés. Cela permet de véritablement reproduire la partie inférieure du joint. La partie supérieure peut quant à elle être réalisée avec une qualité standard d'impression. Cette partie peut représenter l'autre moitié du joint, ainsi ensuite qu'un autre composant horloger directement qui se solidarisera avec la partie moins précise du joint, sans pour autant pénaliser l'étanchéité.

L'homme du métier pourra ainsi réaliser des joints très précis via impression tridimensionnelle. Également, de tels joints peuvent faire directement partie d'un autre composant horloger sur mesure.

L'impression tridimensionnelle peut être réalisée avec une imprimante appropriée, ayant une option de nivellement personnalisé. Selon la complexité/la profondeur de la gravure, la buse de l'imprimante peut être modifiée et adaptée pour une impression optimale.

Ainsi l'invention concerne un procédé de réalisation par fabrication additive d'un composant d'horlogerie 10 comportant au moins une première partie 11. Cette première partie comporte une première surface de référence 110 avec une première géométrie tolérancée en dimension et/ou en planéité et/ou en cylindricité et/ou en état de surface.

Selon l'invention, dans une première étape 100 on se munit d'au moins un premier matériau apte à la réalisation par fabrication additive au moins de la première partie 11 du composant 10.

Et on se munit d'une embase 50 apte à supporter la croissance du premier matériau. On réalise cette embase 5 dans un matériau d'embase, qu'on choisit pour permettre une séparation ultérieure sans arrachement de la première partie 11 et de l'embase 50.

Dans une deuxième étape 200 on usine l'embase 50 dans laquelle on réalise une gravure d'une première surface d'embase 150, qui est le négatif de la première surface de référence 110, avec une géométrie d'embase selon des tolérances, qui sont égales ou plus étroites que celles de la première géométrie de la première surface de référence 110, respectivement en dimension et/ou en planéité et/ou en cylindricité et/ou en état de surface.

On positionne l'embase 50 sur un moyen de fabrication additive, notamment un moyen d'impression tridimensionnelle.

Dans une troisième étape 300 on fait croître par fabrication additive au moins la première partie 11 du composant 10 en contact avec la totalité de la première surface d'embase 150.

Dans une quatrième étape 400 on contrôle le développement de la première partie 11 en référence à une première valeur de consigne prédéterminée, et on reprend de façon itérative la troisième étape 300 de fabrication additive avec apport du premier matériau et la quatrième étape 400 jusqu'à l'obtention et la vérification d'un développement de la première partie 11 supérieur ou égal à la première valeur de consigne prédéterminée, et on stoppe la fabrication additive avec apport du premier matériau quand le développement de la première partie 11 est supérieur ou égal à la première valeur de consigne prédéterminée.

Plus particulièrement, après l'arrêt de la fabrication additive de la première partie 11 avec apport du premier matériau quand le développement de la première partie 11 est supérieur ou égal à la première valeur de consigne prédéterminée, on sépare la première partie 11 de l'embase 50.

Plus particulièrement, après l'arrêt de la fabrication additive de la première partie 11 avec apport du premier matériau quand le développement de la première partie 11 est supérieur ou égal à la première valeur de consigne prédéterminée, on arase la première partie 11 au niveau d'une surface supérieure 500 que comporte l'embase 50.

Plus particulièrement, après l'arrêt de la fabrication additive de la première partie 11 avec apport du premier matériau quand le développement de la première partie 11 est supérieur ou égal à la première valeur de consigne prédéterminée, dans une cinquième étape 500 on poursuit la fabrication additive du composant 10 par apport du premier matériau ou/et d'au moins un deuxième matériau, pour réaliser la totalité du composant 10, dans une sixième étape 600 on contrôle le développement du composant 10, en référence à une deuxième valeur de consigne prédéterminée, et on reprend de façon itérative la cinquième étape 500 de fabrication additive avec apport du premier matériau et/ou du au moins un deuxième matériau et la sixième étape 600 jusqu'à l'obtention et la vérification d'un développement du composant 10, supérieur ou égal à la deuxième valeur de consigne prédéterminée, et on stoppe la fabrication additive avec apport du premier matériau et/ou du au moins un deuxième matériau quand le développement du composant 10 est supérieur ou égal à la deuxième valeur de consigne prédéterminée.

Plus particulièrement, après l'arrêt de la fabrication additive du composant 10, avec apport du premier matériau et/ou du au moins un deuxième matériau quand le développement du composant 10 est supérieur ou égal à la deuxième valeur de consigne prédéterminée, on sépare le composant 10 de l'embase 50.

Plus particulièrement, on réalise la fabrication additive du composant 10 avec un apport d'au moins un deuxième matériau, qu'on choisit différent du premier matériau.

Plus particulièrement, on réalise la fabrication additive du composant 10 avec un apport d'au moins un deuxième matériau, sur la première partie 11.

Plus particulièrement, on choisit le premier matériau apte à constituer la première partie 11 constituant une première garniture d'étanchéité.

Plus particulièrement, on réalise la fabrication additive du composant 10 avec un apport d'au moins un deuxième matériau, et on choisit le deuxième matériau apte à constituer une deuxième partie 12 du composant 10, la deuxième partie 12 constituant une deuxième garniture d'étanchéité.

Plus particulièrement, on choisit le deuxième matériau apte à constituer un deuxième relief 20 constituant la deuxième garniture d'étanchéité avec des propriétés d'arrêt complémentaires à celles de la première garniture d'étanchéité.

Plus particulièrement, on réalise la fabrication additive du composant 10 avec un apport d'au moins un deuxième matériau, et on choisit pour le premier matériau et le deuxième matériau des matériaux élastomères de dureté Shore différente à l'état final respectif de la première partie 11 et du reste du composant 10 après les fabrications additives par apport respectivement du premier matériau et du deuxième matériau.

Plus particulièrement, on réalise la fabrication additive du composant 10 avec un apport d'au moins un deuxième matériau, et on choisit pour au moins le deuxième matériau un matériau apte à former un contraste optique avec le premier matériau.

Plus particulièrement, on choisit pour au moins le premier matériau un matériau apte à former un premier relief fluorescent ou phosphorescent.

Plus particulièrement, on réalise la fabrication additive du composant 10 avec un apport d'au moins un deuxième matériau, et on choisit pour au moins le deuxième matériau un matériau apte à former un deuxième relief transparent et/ou coloré.

Plus particulièrement, on effectue la fabrication additive par impression tridimensionnelle.

Plus particulièrement, on réalise le composant 10 comme garniture d'étanchéité.

## Revendications

1. Procédé de réalisation par fabrication additive d'un composant d'horlogerie (10) comportant au moins une première partie (11) comportant une première surface de référence (110) avec une première géométrie tolérancée en dimension et/ou en planéité et/ou en cylindricité et/ou en état de surface, selon lequel dans une première étape (100) on se munit d'au moins un premier matériau apte à la réalisation par fabrication additive au moins de ladite première partie (11) dudit composant (10), et on se munit d'une embase (50) apte à supporter la croissance dudit premier matériau et qu'on réalise dans un matériau d'embase qu'on choisit pour permettre une séparation ultérieure sans arrachement de ladite première partie (11) et de ladite embase (50), dans une deuxième étape (200) on usine ladite embase (50) dans laquelle on réalise une gravure d'une première surface d'embase (150), qui est le négatif de ladite première surface de référence (110), avec une géométrie d'embase selon des tolérances, qui sont égales ou plus étroites que celles de ladite première géométrie de ladite première surface de référence (110), respectivement en dimension et/ou en planéité et/ou en cylindricité et/ou en état de surface, et on la positionne sur un moyen de fabrication additive, dans une troisième étape (300) on fait croître par fabrication additive au moins ladite première partie (11) dudit composant (10) en contact avec la totalité de ladite première surface d'embase (150), dans une quatrième étape (400) on contrôle le développement de ladite première partie (11) en référence à une première valeur de consigne prédéterminée, et on reprend de façon itérative ladite troisième étape (300) de fabrication additive avec apport dudit premier matériau et ladite quatrième étape (400) jusqu'à l'obtention et la vérification d'un développement de ladite première partie (11) supérieur ou égal à ladite première valeur de consigne prédéterminée, et on stoppe la fabrication additive avec apport dudit premier matériau quand ledit développement de ladite première partie (11) est supérieur ou égal à ladite première valeur de consigne prédéterminée.

2. Procédé de réalisation selon la revendication 1, **caractérisé en ce que**, après l'arrêt de la fabrication additive de ladite première partie (11) avec apport dudit premier matériau quand ledit développement de ladite première partie (11) est supérieur ou égal à ladite première valeur de consigne prédéterminée, on sépare ladite première partie (11) de ladite embase (50).

3. Procédé de réalisation selon la revendication 1, **caractérisé en ce que**, après l'arrêt de la fabrication additive de ladite première partie (11) avec apport dudit premier matériau quand ledit développement de ladite première partie (11) est supérieur ou égal à ladite première valeur de consigne prédéterminée, on arase ladite première partie (11) au niveau d'une surface supérieure que comporte ladite embase (50).

4. Procédé de réalisation selon la revendication 1, **caractérisé en ce que**, après l'arrêt de la fabrication additive de ladite première partie (11) avec apport dudit premier matériau quand ledit développement de ladite première partie (11) est supérieur ou égal à ladite première valeur de consigne prédéterminée, dans une cinquième étape (500) on poursuit la fabrication additive dudit composant (10) par apport dudit premier matériau ou/et d'au moins un deuxième matériau, pour réaliser la totalité dudit composant (10), dans une sixième étape (600) on contrôle le développement dudit composant (10), en référence à une deuxième valeur de consigne prédéterminée, et on reprend de façon itérative ladite cinquième étape (500) de fabrication additive avec apport dudit premier matériau et/ou dudit au moins un deuxième matériau et ladite sixième étape (600) jusqu'à l'obtention et la vérification d'un développement dudit composant (10), supérieur ou égal à ladite deuxième valeur de consigne prédéterminée, et on stoppe la fabrication additive avec apport dudit premier matériau et/ou dudit au moins un deuxième matériau quand ledit développement dudit composant (10) est supérieur ou égal à ladite deuxième valeur de consigne prédéterminée.

5. Procédé de réalisation selon la revendication 4, **caractérisé en ce que**, après l'arrêt de la fabrication additive dudit composant (10), avec apport dudit premier matériau et/ou dudit au moins un deuxième matériau quand ledit développement dudit composant (10) est supérieur ou égal à ladite deuxième valeur de consigne prédéterminée, on sépare ledit composant (10) de ladite embase (50).

6. Procédé de réalisation selon la revendication 4 ou 5, **caractérisé en ce qu'**on réalise la fabrication additive dudit composant (10) avec un apport d'au moins un deuxième matériau, qu'on choisit différent dudit premier matériau.

7. Procédé de réalisation selon la revendication 6, **caractérisé en ce qu'**on réalise la fabrication additive dudit composant (10) avec un apport d'au moins un deuxième matériau, sur ladite première partie (11).

8. Procédé de réalisation selon l'une des revendications 1 à 7, **caractérisé en ce qu'**on choisit ledit premier matériau apte à constituer ladite première partie constituant une première garniture d'étanchéité.

9. Procédé de réalisation selon l'une des revendications 4 à 8, **caractérisé en ce qu'**on réalise la fabrication additive dudit composant (10) avec un apport d'au moins un deuxième matériau, et **en ce qu'**on choisit ledit deuxième matériau apte à constituer une deuxième partie (12) dudit composant (10), ladite deuxième partie (12) constituant une deuxième garniture d'étanchéité.

10. Procédé de réalisation selon les revendications 8 et 9, **caractérisé en ce qu'**on choisit ledit deuxième matériau apte à constituer une dite deuxième partie (12) constituant ladite deuxième garniture d'étanchéité avec des propriétés d'arrêt complémentaires à celles de ladite première garniture d'étanchéité.

11. Procédé de réalisation selon l'une des revendications 4 à 10, **caractérisé en ce qu'**on réalise la fabrication additive dudit composant (10) avec un apport d'au moins un deuxième matériau, et **caractérisé en ce qu'**on choisit pour ledit premier matériau et ledit deuxième matériau des matériaux élastomères de dureté Shore différente à l'état final respectif de ladite première partie (11) et du reste dudit composant (10) après les fabrications additives par apport respectivement dudit premier matériau et dudit deuxième matériau.

12. Procédé de réalisation selon l'une des revendications 4 à 11, **caractérisé en ce qu'**on réalise la fabrication additive dudit composant (10) avec un apport d'au moins un deuxième matériau, et **en ce qu'**on choisit ledit deuxième matériau apte à constituer une partie structurelle rigide (13) dudit composant (10).

13. Procédé de réalisation selon l'une des revendications 4 à 11, **caractérisé en ce qu'**on réalise la fabrication additive dudit composant (10) avec un apport d'au moins un deuxième matériau, et **caractérisé en ce qu'**on choisit pour au moins ledit deuxième matériau un matériau apte à former un contraste optique avec ledit premier matériau.

14. Procédé de réalisation selon l'une des revendications 1 à 12, **caractérisé en ce qu'**on choisit pour au moins ledit premier matériau un matériau apte à former un premier relief fluorescent ou phosphorescent.

15. Procédé de réalisation selon l'une des revendications 4 à 13, **caractérisé en ce qu'**on réalise la fabrication additive dudit composant (10) avec un apport d'au moins un deuxième matériau, et **caractérisé en ce qu'**on choisit pour au moins ledit deuxième matériau un matériau apte à former un deuxième relief transparent et/ou coloré.

16. Procédé de réalisation selon l'une des revendications 1 à 14, **caractérisé en ce qu'**on effectue ladite fabrication additive par impression tridimensionnelle.

17. Procédé de réalisation selon l'une des revendications 1 à 16, **caractérisé en ce qu'**on réalise ledit composant (10) comme garniture d'étanchéité.

18. Pièce d'horlogerie comprenant un composant d'horlogerie obtenu par le procédé selon l'une des revendications 1 à 17.

19. Pièce d'horlogerie selon la revendication 18, **caractérisé en ce que** ledit composant est une garniture d'étanchéité.
